# FASCICULE DE BREVET EUROPEEN

(11) **EP 3 826 046 B1**
(45) Date de publication et mention de la délivrance du brevet: **04.03.2026**
(21) Numéro de dépôt: 20208984.3
(22) Date de dépôt: 20.11.2020
(51) Int. Cl.: H01H 71/08, H01H 71/14, H01H 71/40, H01H 83/14, H01H 83/22, H01H 83/20, H01H 11/00, H02B 1/20

(54) **SYSTÈME ÉLECTROMÉCANIQUE D'INTERRUPTION D'UN COURANT ÉLECTRIQUE**
ELEKTROMECHANISCHES STROMUNTERBRECHUNGSSYSTEM
ELECTROMECHANICAL SYSTEM FOR INTERRUPTING AN ELECTRIC CURRENT

(30) Priorité: 21.11.2019 FR 1913049
(43) Date de publication de la demande: 26.05.2021
(73) Titulaire: HAGER-ELECTRO SAS, 67210 Obernai (FR)
(72) Inventeur: BAUMANN, Eric, 67610 LA WANTZENAU (FR); BOITEUX, Vincent, 67200 STRASBOURG (FR); CHARLES, Benjamin, 67114 ESCHAU (FR); FRITSCH, Jacky, 67100 STRASBOURG (FR); LERCH, Arnaud, 67114 ESCHAU (FR)
(74) Mandataire: Ipsilon

(56) Documents cités:
- FR-A1- 2 725 071
- FR-A1- 2 856 528
- FR-A1- 2 938 130
- FR-A1- 3 039 698

## Description

La présente invention se rapporte au domaine des systèmes de gestion des anomalies d'un courant électrique et plus particulièrement au domaine des systèmes de type disjoncteur, bloc ou interrupteur différentiel modulaire pour la gestion des anomalies d'un courant électrique telles que surcharge, court-circuit et/ou un courant résiduel.

Dans les installations domestiques, les mécanismes actuels qui participent à la gestion des anomalies du courant électrique distribué à l'intérieur du réseau d'un logement, d'un local ou d'un établissement, présentent la forme d'un système de coupure traversé par le courant électrique en amont de sa distribution. Ce système de coupure comprend ainsi classiquement, d'une part, des interfaces d'entrée du courant électrique en provenance du réseau extérieur d'une habitation et, d'autre part, un nombre d'interfaces identiques pour la sortie du courant électrique à destination du réseau intérieur de l'habitation. La connexion du système de coupure au réseau extérieur est réalisée au niveau d'une interface comportant plusieurs paires de connecteurs configurés pour interagir avec des barres omnibus ou barres de pontage dédiées qui sont des structures conductrices de faible impédance adaptées à une distribution électrique. Ces barres de pontage sont réalisées sous la forme d'au moins une paire de peignes arrangés d'une façon parallèle entre eux et respectivement dédiés au raccordement du neutre et de chacune des phases. Chacun de ces peignes comprend un rail de liaison disposé dans une matière isolante et portant une pluralité de points de connexion sous la forme de dents espacées de ses homologues, de sorte que les barres de pontage présentent un aspect général de broche ou de peigne. Les points de connexion de ces barres de pontage sont alors destinés à interagir avec les connecteurs du système de coupure grâce à une coopération de type mâle-femelle, opérée par insertion de dents des barres de pontage au niveau de ces connecteurs. Un assemblage modulaire intégrant un système électromécanique d'interruption d'un courant électrique est notamment connu du document FR 2 938 130 A1.

Dans le cadre de l'installation d'un mécanisme de coupure, celui-ci est connecté, d'une part, à une barre de pontage dédiée au courant neutre et, d'autre part, à au moins une barre de pontage dédiée au courant de phase, ces barres étant agencées parallèlement l'une à l'autre. La pluralité de points de connexion le long des barres de pontage permet l'installation de plusieurs mécanismes identiques de coupure montés juxtaposés sur ces barres. La juxtaposition de ces mécanismes est alors tributaire de l'espacement entre les dents de ces barres de pontage.

Technologiquement, deux types de barres de pontage sont identifiés. Un premier type de barre qui comporte un espacement plus important entre deux dents consécutives destinées à la transmission d'un courant, neutre ou de phase, identique avec des connectiques de dent présentant une forme de fourche, est utilisé principalement dans les pays de culture germanique. A l'inverse, un second type de barre qui comporte un d'espacement plus réduit entre deux dents consécutives destinées à la transmission d'un courant, neutre ou de phase, identique avec des connectiques de dent en forme de languette, est utilisé essentiellement dans les pays de culture latine. Les dimensions des mécanismes de coupures sont alors spécifiques des barres de pontage auxquelles ils sont destinés à être connectés. C'est pourquoi, dans les pays de culture germanique, les mécanismes de coupures sont arrangés avec un dimensionnement plus large, outre leurs connectiques spécifiques.

Cependant, dans les pays adoptant le standard germanique, lorsqu'il s'agit, sur une même longueur de barre de pontage, d'optimiser le nombre de réseaux associés à des mécanismes de coupure, l'écartement spécifique entre deux dents consécutives pour transmission d'un courant identique dans ces barres de pontage standard devient contraignant. La solution consiste alors à substituer ces barres de pontage dont l'écartement est trop important par des barres de pontage correspondant au standard latin comprenant un écartement réduit, tout en y associant des mécanismes de coupure adaptés qui, d'une part, présentent un dimensionnement de largeur réduite et, d'autre part, disposent de connectiques complémentaires de la forme en languette spécifique à ces barres de pontage de substitution.

Toutefois, si cette solution permet d'augmenter le nombre de mécanismes le long d'une même longueur de barre de pontage, elle présente un double inconvénient. En effet, cette solution qui repose sur l'introduction d'une nouvelle référence écarte, au moins pour des cas de figures qui rencontrent un problème d'encombrement, l'utilisation d'un standard technologique culturellement installé. Par ailleurs, lors de l'ajout de réseaux associés à un mécanisme de coupure sur des barres de pontage de standard germanique saturées, le remplacement de la barre de distribution par un nouveau standard est imposé. Enfin, pour l'électricien ou l'installateur du réseau électrique, il devient nécessaire de disposer sur site de chacun des types de barre de pontage. Cette multiplication du nombre de références tend alors également à complexifier le travail de l'intervenant.

La présente invention a pour but de pallier ces différents inconvénients en proposant une solution qui optimise, le long d'une même longueur de barre de pontage, le nombre de circuits ou réseaux associés à des mécanismes de coupure sans intervenir sur les références de barre de pontage existantes et utilisées en raison de standards technologiques ou culturels.

L'invention a ainsi pour objet un assemblage modulaire tel que détaillée par l'énoncé de la revendication principale 1.

L'invention sera mieux comprise, grâce à la description ci-après, qui se rapporte à différents modes de réalisation préférés, donnés à titre d'exemple non limitatif, et expliqués avec référence aux dessins schématiques annexés, dans lesquels :

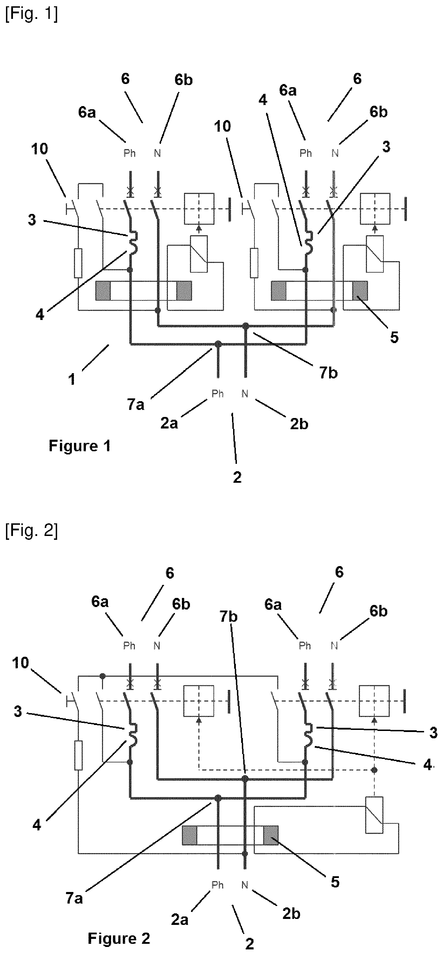

[Fig. 1] représente un premier schéma électrique de système électromécanique d'interruption pour un assemblage modulaire selon l'invention dans lequel des dispositifs de mesure de courant différentiel sont propres à chacun des réseaux électriques positionnés en sortie.
[Fig. 2] représente un second schéma électrique de système électromécanique d'interruption pour un assemblage modulaire selon l'invention dans lequel un dispositif de mesure de courant différentiel est commun aux différents réseaux électriques positionnés en sortie.
[Fig. 3] représente un exemple de système électromécanique pour un assemblage modulaire selon l'invention dans le cadre d'une connexion avec une barre de pontage du type disponible dans les pays de culture germanique.
[Fig. 4] représente un exemple de connexions juxtaposées de plusieurs systèmes électromécaniques pour un assemblage modulaire selon l'invention sur une barre de pontage du type disponible dans les pays de culture germanique.

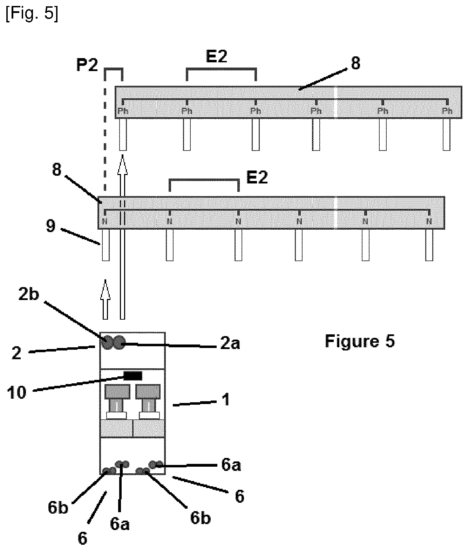

[Fig. 5] représente un exemple de système électromécanique pour un assemblage modulaire selon l'invention dans le cadre d'une connexion avec une barre de pontage du type disponible dans les pays de culture latine.
[Fig. 6] représente un exemple de connexions juxtaposées de plusieurs systèmes électromécaniques pour un assemblage modulaire selon l'invention sur une barre de pontage du type disponible dans les pays de culture latine.
[Fig. 7] illustre un exemple de système électromécanique selon l'art antérieur dans le cadre d'une connexion avec une barre de pontage du type disponible dans les pays de culture germanique.

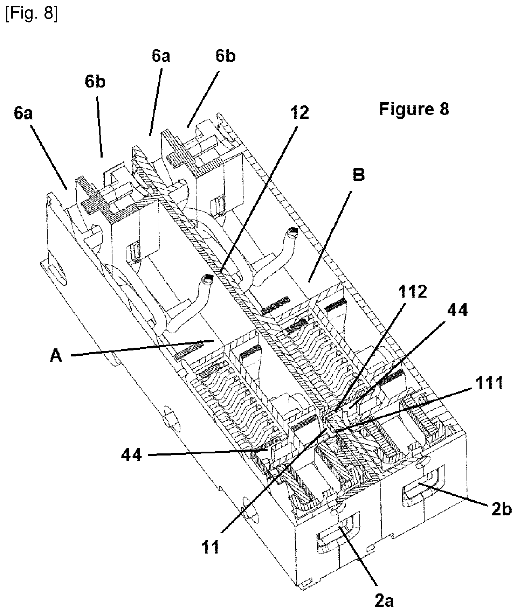

[Fig. 8] illustre un exemple d'assemblage modulaire selon l'invention selon une vue en section.

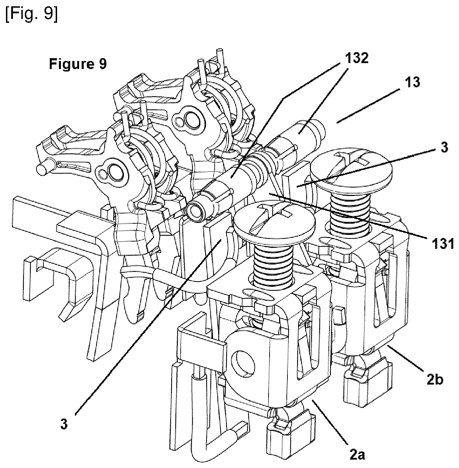

[Fig. 9] illustre un exemple de l'arrangement de connexion inter-modulaire de courant neutre pour un assemblage modulaire selon l'invention au niveau de la connexion d'entrée de courant.

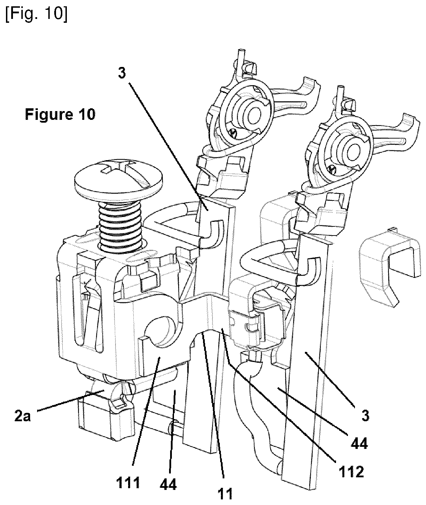

[Fig. 10] illustre un exemple de l'arrangement de connexion inter-modulaire de courant de phase pour un assemblage modulaire selon l'invention au niveau de la connexion d'entrée de courant selon un premier angle de vue.

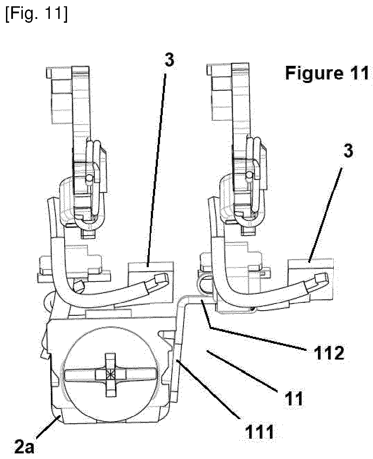

[Fig. 11] illustre un exemple de l'arrangement de connexion inter-modulaire de courant de phase pour un assemblage modulaire selon l'invention au niveau de la connexion d'entrée de courant selon un second angle de vue.

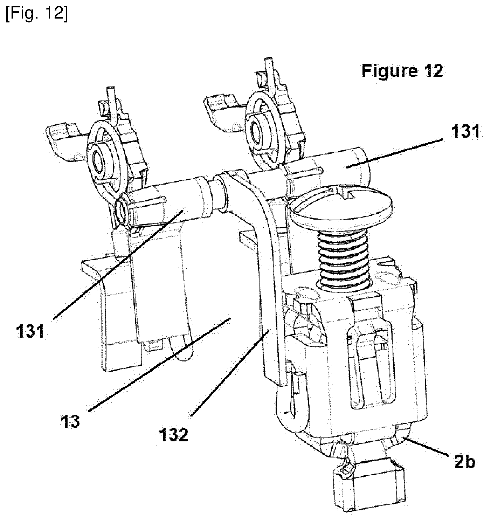

[Fig. 12] illustre un exemple de l'arrangement de connexion inter-modulaire de courant neutre pour un assemblage modulaire selon l'invention au niveau de la connexion d'entrée de courant selon un premier angle de vue.

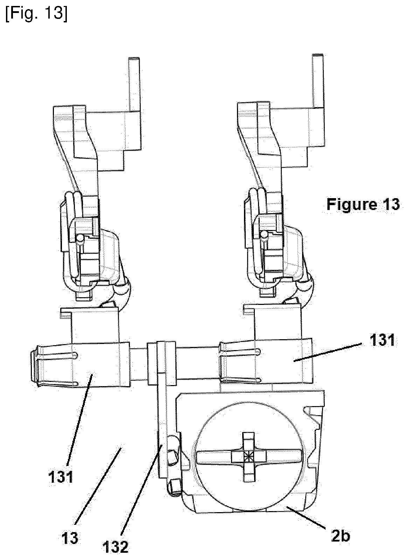

[Fig. 13] illustre un exemple de l'arrangement de connexion inter-modulaire de courant neutre pour un assemblage modulaire selon l'invention au niveau de la connexion d'entrée de courant selon un second angle de vue.

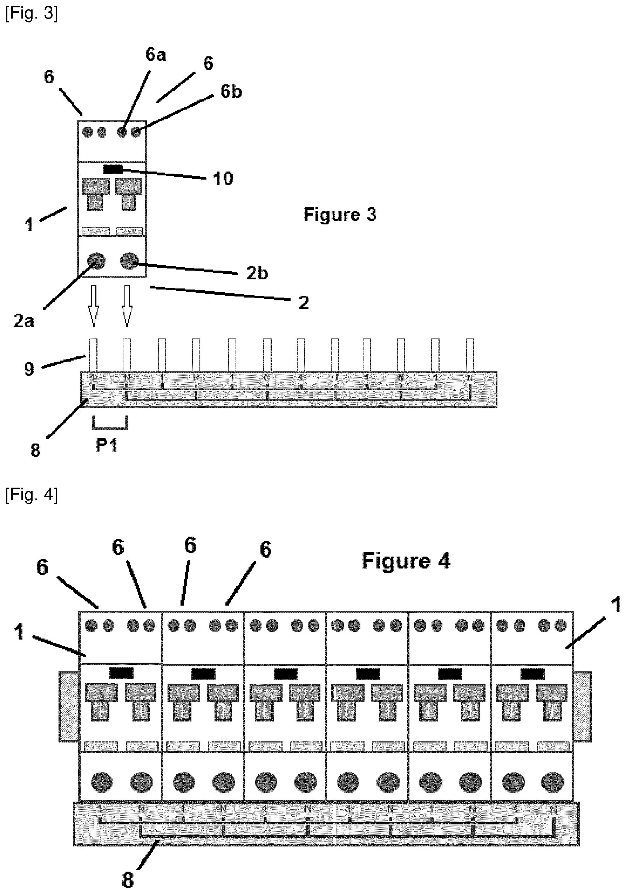

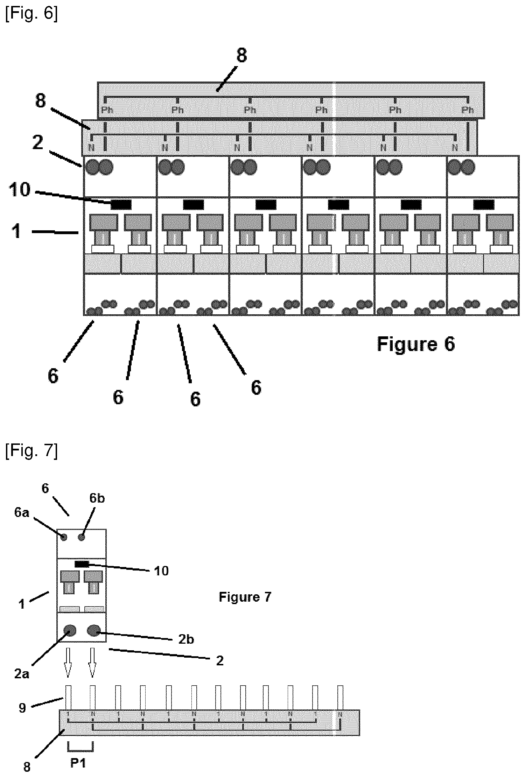

Il convient de relever que, aux figures 3, 4 et 7 du présent document, pour les besoins de la schématisation, les points de connexion de la barre de pontage sont illustrés sous la forme de languette. Toutefois, les barres de pontage du type disponible dans les pays de culture germanique comportent des connectiques de dent qui réalisent des points de connexion présentant une forme de fourche.

L'invention concerne un assemblage modulaire qui intègre notamment un système électromécanique d'interruption d'un courant électrique présentant une anomalie de surcharge et/ou un court-circuit et/ou un courant résiduel, comprenant :
- au moins un ensemble 2 de bornes 2a, 2b de connexion d'entrée de courant comprenant au moins, d'une part, une borne de connexion 2a dédiée au courant de phase et, d'autre part, une borne de connexion 2b dédiée au courant neutre,
- au moins un relais thermique 3 et/ou un relais électromagnétique 4 et/ou un dispositif de mesure de courant différentiel 5 couplé à un interrupteur,
de sorte que le système d'interruption 1 comprend également au moins deux ensembles 6 de bornes de connexion de sortie de courant comprenant chacun au moins une borne de connexion 6a dédiée au courant de phase et une borne de connexion 6b dédiée au courant neutre, de sorte que, d'une part, chaque borne de connexion 6a de courant de phase en sortie est reliée à la borne de connexion 2a de courant de phase en entrée au niveau d'un nœud commun 7a et, d'autre part, chaque borne de connexion 6b de courant neutre en sortie est reliée à la borne de connexion 2b de courant neutre en entrée au niveau d'un nœud commun 7b.

Le système électromécanique d'interruption 1 de l'invention propose ainsi plusieurs ensembles 6 de bornes de connexion de sortie de courant qui réalisent plusieurs interfaces de connexion à destination de différents circuits ou réseaux électriques positionnés en sortie. Plusieurs circuits ou réseaux électriques positionnés en sortie sont alors en mesure d'être connectés au niveau d'un système électromécanique d'interruption 1 commun. Les bornes 6a, 6b respectives de ces différents ensembles 6 de connexion de sortie de courant se trouvent rattachées aux bornes 2a, 2b d'un ensemble 2 de connexion d'entrée de courant unique au travers d'un ou de plusieurs mécanismes d'interruption de courant réalisé par un relais thermique 3 et/ou un relais magnétique 4 et/ou un dispositif de mesure de courant différentiel 5 couplé à un interrupteur.

Le système électromécanique d'interruption 1 de l'invention autorise ainsi, grâce à des nœuds 7a, 7b dédiés, la réalisation de connexions en parallèle des circuits ou réseaux électriques positionnés en sortie. Cette connexion en parallèle permet ainsi de rattacher au niveau d'un même point 9 de connexion d'une barre de pontage 8 plusieurs circuits ou réseaux électriques. Aussi, grâce au système électromécanique d'interruption 1 de l'invention, sans opérer une substitution de la barre de pontage 8, il est possible de s'affranchir de la contrainte liée à l'écartement entre des points de connexion 9 consécutifs disposés sur la barre de pontage 8 et destinés à la transmission d'un courant, neutre ou de phase, identique, pour augmenter sur une même longueur de barre de pontage 8 le nombre de circuits ou réseaux électriques associés à des mécanismes de coupure. Ces mécanismes de coupure du flux de courant électrique sont réalisés par un relais thermique 3 et/ou un relais électromagnétique 4 et/ou un dispositif de mesure de courant différentiel 5 couplé à un interrupteur. Il convient de relever que, dans le système électromécanique d'interruption 1 de l'invention, entre au moins un ensemble 6 de bornes 6a, 6b de connexion de sortie de courant et l'ensemble 2 de bornes 2a, 2b de connexion d'entrée de courant, lorsque le système 1 comprend plusieurs mécanismes de coupure 3, 4, 5 du flux de courant électrique, ces différents mécanismes de coupure 3, 4, 5 sont disposés en série le long de la jonction électriques entre, d'une part, les bornes 2a, 2b de connexion de l'ensemble 2 d'entrée de courant et, d'autre part, les bornes 6a, 6b de connexion de sortie de courant.

Selon un premier exemple particulier de construction, l'ensemble 2 de bornes de connexion d'entrée de courant et les ensembles 6 de bornes de connexion de sortie de courant sont positionnés au niveau de face opposées du système électromécanique d'interruption 1. Cet exemple de construction permet, d'une part, d'opérer une discrimination des bornes de connexion pour l'utilisateur et donc faciliter le montage de l'appareil et, d'autre part, de s'affranchir de l'encombrement susceptible d'exister par la présence d'une barre de pontage 8 positionnée au niveau de l'une des faces du système de l'invention.

Selon un autre exemple particulier de construction, chaque ensemble 6 de bornes 6a, 6b de connexion de sortie est associé à un relais thermique 3 et/ou un relais magnétique 4 et/ou un dispositif de mesure de courant différentiel 5 couplé à un interrupteur. Selon cet exemple particulier de construction, le système électromécanique d'interruption 1 de l'invention comprend un ou plusieurs mécanismes de coupure de courant électrique positionné entre les bornes 6a, 6b de connexion de sortie et les nœuds 7a, 7b de connexion. Le système électromécanique d'interruption 1 est ainsi configuré de sorte que la coupure du courant s'opère de façon indépendante au niveau de chacun des ensembles 6 de bornes 6a, 6b de connexion de sortie. La détection d'une anomalie au niveau de l'un des circuits ou réseaux électriques positionnés en sortie actionne une interruption du courant sur le circuit sans que celle-ci n'impacte les autres circuits connectés en sortie du système électromécanique d'interruption 1 de l'invention.

Selon un autre exemple particulier de construction, un relais thermique 3 et/ou un relais électromagnétique 4 et/ou un dispositif de mesure de courant différentiel 5 couplé à un interrupteur est associé à l'ensemble 2 de bornes 2a, 2b de connexion d'entrée de courant entre ces bornes 2a, 2b de connexion d'entrée et les nœuds 7a, 7b de jonction aux bornes respectives de chaque ensemble 6 de bornes 6a, 6b de connexion de sortie. Selon cet exemple particulier de construction, le système électromécanique d'interruption 1 est configuré de telle sorte que la coupure du courant s'opère de façon commune au niveau de tous les ensembles 6 de bornes 6a, 6b de connexion de sortie. La détection d'une anomalie au niveau de l'un des circuits ou réseaux électriques positionnés en sortie du système d'interruption 1 de l'invention actionne l'un des mécanismes d'interruption 3, 4, 5 qui opère une coupure de l'ensemble des flux de courant électrique qui traversent le système électromécanique d'interruption 1 de l'invention.

Il convient de relever que les exemples particuliers de construction précédemment détaillés ne présentent pas d'incompatibilité technique. En effet, selon différentes variantes de construction, le système électromécanique d'interruption 1 de l'invention est susceptible de comprendre, d'une part, un ou plusieurs mécanismes de coupure positionnés entre les bornes 6a, 6b de connexion de sortie et les nœuds 7a, 7b de connexion et, d'autre part, un ou plusieurs mécanismes de coupure positionnés entre les bornes 2a, 2b de connexion d'entrée et les des nœuds 7a, 7b de connexion. Aussi, selon ces différentes variantes de construction, parmi le relais thermique 3 et/ou le relais électromagnétique 4 et/ou le dispositif de mesure de courant différentiel 5, d'une part, un ou plusieurs des mécanismes de coupure sont spécifiques à un ensemble 6 de bornes 6a, 6b de connexion de sortie et, d'autre part, un ou plusieurs des mécanismes de coupure sont communs à tous les ensembles 6 de bornes 6a, 6b de connexion de sortie. Ces différentes variantes de construction permettent ainsi de réaliser des systèmes électromécaniques d'interruption 1 arrangés pour opérer des coupures de courant électrique discriminantes selon le type d'anomalie détectée sur un ou plusieurs circuits ou réseaux électriques localisés en sortie du système d'interruption 1.

Selon un autre exemple particulier de construction de l'invention, le système électromécanique d'interruption 1 s'intègre dans un boitier isolant adapté pour être monté sur un support de fixation et comprenant au moins deux faces qui présentent des orifices adaptés pour le positionnement d'ensembles 2, 6 de connectiques d'entrée 2a, 2b ou de sortie 6a, 6b de courant électrique. Chaque boitier intégrant un système 1 selon l'invention réalise ainsi un bloc modulaire destiné à être associé à des points 9 de connexion portés par une ou plusieurs barres de pontage 8. Sur la barre de pontage, l'écartement entre deux points 9 de connexion consécutifs destinées à la transmission d'un courant, neutre ou de phase, identique présente une largeur plus ou moins importante selon le standard technologique culturel de la barre ou ensemble de barres de pontage 8 utilisé. Sur le bloc modulaire, les bornes 2a, 2b de l'ensemble 2 de connexion d'entrée sont positionnées de façon à présenter un pas P1, P2 d'écartement entre, d'une part, l'orifice de connexion de la borne 2a dédiée au courant de phase et, d'autre part, l'orifice de connexion de la borne de connexion 2b dédiée au courant neutre. Dans le cadre des standards techniques utilisés dans les pays de culture latine, le pas P2 d'écartement entre les bornes 2a, 2b de l'ensemble 2 de connexion d'entrée est différent de celui P1 présent sur les blocs modulaires présentant un standard technique utilisé dans les pays de culture germanique.

Selon un autre exemple particulier de construction, les bornes 2a, 2b de l'ensemble 2 de connexion d'entrée présentent un pas P1 d'écartement et des connectiques respectives adaptées pour coopérer avec au moins une barre de pontage 8 comprenant des points de connexion 9 ayant une forme de fourche. Chacune des bornes 2a, 2b de l'ensemble 2 de connexion d'entrée se trouve alors associée à un point de connexion 9 respectif destiné à la transmission d'un courant, neutre ou de phase, spécifique. Selon une spécificité de cet exemple particulier de construction, le boitier isolant qui loge le système électromécanique d'interruption 1 de l'invention étant adapté pour être monté contre une paroi sensiblement verticale, les bornes 2a, 2b de l'ensemble 2 de connexion d'entrée sont disposées au niveau d'orifices du boitier positionnés sur une face inférieure du boitier, de sorte que la barre de pontage 8 se connecte au système 1 de l'invention par le dessous.

Selon une alternative à cet exemple particulier de construction, les bornes 2a, 2b de l'ensemble 2 de connexion d'entrée présentent un pas P2 d'écartement et des connectiques respectives adaptées pour coopérer avec une ou plusieurs barres de pontage 8 comprenant des points de connexion 9 ayant une forme de languette. Chacune des bornes 2a, 2b de l'ensemble 2 de connexion d'entrée se trouve alors associé à un point 9 de connexion respectif destiné à la transmission d'un courant, neutre ou de phase, spécifique. Selon le type de barre de pontage 8 utilisé, le courant, neutre ou de phase, est transporté par la même barre de pontage 8 ou par des barres de pontage 8 respectives. Selon une spécificité de cet exemple particulier de construction, le boitier isolant qui loge le système électromécanique d'interruption 1 de l'invention étant adapté pour être monté contre une paroi sensiblement verticale, les bornes 2a, 2b de l'ensemble 2 de connexion d'entrée sont disposées au niveau d'orifices du boitier positionnés sur une face supérieure du boitier, de sorte que la barre de pontage 8 se connecte au système 1 de l'invention par le dessus

Selon un autre exemple particulier de construction, le système électromécanique d'interruption 1 comprend au moins un mécanisme d'actionnement 10 d'une modification du champ magnétique à proximité du dispositif de mesure de courant différentiel 5 couplé à un interrupteur. Ce mécanisme permet à un intervenant de procéder à un contrôle de fonctionnement du dispositif de mesure de courant différentiel 5 et de sa capacité de détection d'une anomalie liée à la présence d'un courant résiduel au niveau du ou des circuits ou réseaux associés à un ou plusieurs ensembles 6 de connexion de sortie du système électromécanique d'interruption 1 de l'invention.

Dans le cadre de la construction de l'assemblage modulaire selon l'invention, chacun des ensembles 6 de bornes de connexion 6a, 6b de sortie de courant du système électromécanique d'interruption 1 d'un courant électrique est intégré dans un module respectif A, B, un premier module A intégrant la borne de connexion d'entrée 2a dédiée au courant de phase et un second module B intégrant la borne de connexion d'entrée 2b dédiée au courant neutre. Ainsi, selon cet exemple de réalisation de l'assemblage selon l'invention, le système électromécanique d'interruption 1 est intégré et réparti dans une paire de modules A, B juxtaposés. Le courant électrique en entrée est arrangé pour être respectivement associé à un module dédié, d'une part, pour le courant de phase 2a et, d'autre part, pour le courant neutre 2b. A l'inverse, en sortie, chacun des modules A et B est arrangé pour assurer une distribution, d'une part, de courant de phase 6a et, d'autre part, de courant neutre 6b. Aussi, dans l'assemblage modulaire de l'invention, au niveau de la séparation entre les deux modules A, B formée par le cloisonnement inter-modulaire 12, deux points de passage sont configurés pour assurer une continuité électrique entre les bornes de connexion d'entrée 2a, 2b et de sortie 6a, 6b, tant en ce qui concerne le courant de phase 2a, 6a que le courant neutre 2b, 6b.

Ainsi, selon un exemple correspondant à une première variante de l'assemblage modulaire selon l'invention, l'assemblage modulaire comprend un arrangement de connexion inter-modulaire de courant de phase entre, d'une part, le circuit de la borne de connexion d'entrée 2a dédiée au courant de phase du premier module A et, d'autre part, le circuit de la borne de connexion de sortie 6a dédiée au courant de phase du second module B.

Selon un exemple correspondant à une spécificité de cette première variante de l'assemblage modulaire, l'arrangement de connexion inter-modulaire de courant de phase comprend un dispositif conducteur traversant 11 disposé au travers du cloisonnement inter-modulaire 12 au niveau de l'intersection du cloisonnement inter-modulaire 12 avec un plan qui sépare, d'une part, la borne de connexion d'entrée 2a dédiée au courant de phase du premier module A et, d'autre part, par l'intermédiaire d'une tôle conductrice 44, un relais thermique 3 intégré au second module B. Selon cet exemple spécifique de mise en œuvre, le dispositif conducteur traversant 11 est positionné au travers du cloisonnement inter-modulaire 12 à un niveau optimisé en termes d'encombrement de façon à limiter au mieux la longueur et le volume du dispositif conducteur traversant 11 à l'intérieur de l'assemblage modulaire de l'invention. En effet, le point de passage du dispositif conducteur traversant 11 est disposé sur le cloisonnement inter-modulaire 12 à une distance sensiblement équivalente de la borne de connexion d'entrée 2a dédiée au courant de phase du premier module A et du circuit du relais thermique 3 intégré au second module B. Par ailleurs, lorsque les bornes de connexion d'entrée 2a, 2b de courant au niveau de chacun des modules A, B présentent des configurations et des encombrements sensiblement similaires et que leurs positionnements respectifs de part et d'autre du cloisonnement inter-modulaire 12 sont réalisés selon un arrangement sensiblement symétrique, la disposition particulière du dispositif conducteur traversant 11 au travers du cloisonnement inter-modulaire 12 permet d'opérer conjointement une connexion du dispositif conducteur traversant 11 au relais thermique 3 intégré au second module B qui ne soit pas gênée par l'encombrement de la borne de connexion d'entrée 2b dédiée au courant neutre dans le second module B.

Selon un exemple correspondant à une variante de construction d'un tel dispositif conducteur traversant 11, celui-ci présente un arrangement comprenant au moins deux portions 111, 112 dont l'une est inclinée par rapport à l'autre, de sorte que :
- la première portion 111 est, d'une part, en contact avec une face de la borne de connexion d'entrée 2a dédiée au courant de phase du premier module A et, d'autre part, disposée selon au moins un axe orienté depuis la borne de connexion d'entrée 2a vers l'intérieur du premier module A,
- la seconde portion 112 est, d'une part, arrangée transversalement par rapport au cloisonnement inter-modulaire 12 et, d'autre part, disposée dans un plan séparant, d'un côté, les bornes de connexion d'entrée 2a, 2b et, d'un autre côté, les relais thermiques 3 couplés à des interrupteurs.

Ce dispositif conducteur traversant 11 est susceptible d'être réalisé dans un matériau présentant une certaine souplesse, par exemple une tresse électrique, de sorte qu'il puisse autoriser un montage et une installation facilitée en permettant notamment un ajustement optimal de son positionnement dans l'assemblage modulaire, tout en s'affranchissant des contraintes d'encombrement spécifiques aux pièces et éléments disposés dans cet assemblage modulaire. Alternativement, le dispositif conducteur traversant 11 est réalisé dans un matériau rigide selon une forme spécifiquement adaptée au volume d'encombrement dédié à son positionnement dans l'assemblage modulaire. Selon un exemple spécifique de cette variante de construction, le dispositif conducteur traversant 11 est réalisé sous la forme d'une pièce en équerre dans laquelle les deux portions 111, 112 sont arrangées perpendiculairement entre elles.

Par ailleurs, selon un exemple correspondant à une seconde variante de l'assemblage modulaire selon l'invention et susceptible d'être combinée avec la première variante énoncée précédemment, l'assemblage modulaire comprend un arrangement de connexion inter-modulaire de courant neutre entre, d'une part, le circuit de la borne de connexion d'entrée 2b dédiée au courant neutre du second module B et, d'autre part, un connecteur destiné à coopérer avec un circuit de la borne de connexion de sortie 6b dédiée au courant neutre du premier module A.

Selon un exemple correspondant à une spécificité de cette seconde variante de l'assemblage modulaire, l'arrangement de connexion inter-modulaire de courant neutre 13 comprend :
- un dispositif conducteur traversant 132 du cloisonnement inter-modulaire 12, d'une part, arrangé transversalement par rapport au cloisonnement inter-modulaire 12 et, d'autre part, disposée dans un plan séparant, d'un côté, les bornes de connexion d'entrée 2a, 2b et, d'un autre côté, les dispositifs de mesure de courant différentiel 5 couplés à des interrupteurs, le dispositif conducteur traversant 132 étant disposé dans une portion de l'assemblage modulaire dans laquelle il est séparé de tout conducteur de polarité opposée d'une longueur au moins égale à la distance d'isolation selon la norme IEC 61009-1,
- un élément conducteur 131 comprenant, d'une part, une première extrémité en contact avec une face de la borne de connexion d'entrée 2b dédiée au courant neutre du second module B et, d'autre part, une seconde extrémité en contact avec le dispositif conducteur traversant 132.

Selon un exemple de cette variante, le dispositif conducteur traversant 132 du cloisonnement inter-modulaire 12 est réalisé sous la forme d'un élément sensiblement axial positionné à un niveau optimisé en termes d'encombrement de façon à limiter au mieux la longueur et le volume de l'arrangement de connexion inter-modulaire de courant neutre 13. En effet, le point de passage du dispositif conducteur traversant 132 est disposé sur le cloisonnement inter-modulaire 12 dans une portion de l'assemblage modulaire dans laquelle il est séparé de tout conducteur de polarité opposée d'une longueur au moins égale à la distance d'isolation selon la norme IEC 61009-1. Par ailleurs, le dispositif conducteur traversant 132 est positionné de façon décalée au niveau du cloisonnement inter-modulaire 12 par rapport au dispositif conducteur traversant 11 du courant de phase de façon à éviter toute interaction parasite et inappropriée entre les deux circuits de courant. Aussi, lorsque les bornes de connexion d'entrée 2a, 2b de courant au niveau de chacun des modules A, B présentent des configurations et des encombrements sensiblement similaires et que leurs positionnements respectifs de part et d'autre du cloisonnement inter-modulaire 12 sont réalisés selon un arrangement sensiblement symétrique, l'élément conducteur 131 associé au dispositif conducteur traversant 132 du cloisonnement inter-modulaire 12 présente un arrangement adapté au décalage de position du dispositif conducteur traversant 132. Aussi, selon un exemple correspondant à une variante de construction, cet élément conducteur 131 est réalisée dans un matériau présentant une certaine souplesse, par exemple une tresse électrique, apte à s'adapter aux contraintes d'encombrement spécifiques aux pièces et éléments disposés dans cet assemblage modulaire. Alternativement, un matériau rigide est susceptible d'être utilisé, de sorte que l'élément conducteur 131 impose un circuit électrique spatialement déterminé qui ne soit pas en mesure d'être déplacé comme dans le cadre de l'utilisation d'un matériau souple et écarte le risque d'interactions parasites accidentelles.

Selon un exemple correspondant à une variante de construction d'un tel dispositif conducteur traversant 132, celui opère une connexion avec les circuits des bornes de connexion de sortie , 6b dédiée au courant neutre de chacun des modules A, B de l'assemblage. Le dispositif conducteur traversant 132 se trouve ainsi réalisé sous la forme d'un élément axial positionné au travers du cloisonnement inter-modulaire 12 de sorte que chacune de ses portions positionnées dans les deux modules A, B de l'assemblage soient respectivement connectées aux circuits des bornes de connexion de sortie 6b dédiée au courant neutre propres à chacun des modules A, B de l'assemblage.

Selon un exemple correspondant à une variante de construction susceptible d'être combinée avec les variantes de construction précédemment détaillées, le dispositif conducteur traversant 132 est réalisé par un dispositif de serrage mécanique de l'assemblage modulaire. Selon cet exemple, le dispositif conducteur traversant 132 du cloisonnement inter-modulaire 12 est réalisé par une pièce ou un ensemble formant un mécanisme de serrage des modules A, B assemblés entre eux. Cet exemple de construction permet d'opérer une réduction de l'encombrement dans l'assemblage modulaire en limitant le nombre de pièces en présence.

## Revendications

1. Assemblage modulaire intégrant un système électromécanique d'interruption (1) d'un courant électrique présentant une anomalie de surcharge et/ou un court-circuit et/ou un courant résiduel, comprenant :
- au moins un ensemble (2) de bornes de connexion d'entrée de courant comprenant au moins, d'une part, une borne de connexion (2a) dédiée au courant de phase et, d'autre part, une borne de connexion (2b) dédiée au courant neutre,
- au moins un relais thermique (3) et/ou un relais électromagnétique (4) et/ou un dispositif de mesure de courant différentiel (5) couplé à un interrupteur,
- au moins deux ensembles (6) de bornes de connexion de sortie de courant comprenant chacun au moins une borne de connexion (6a) dédiée au courant de phase et une borne de connexion (6b) dédiée au courant neutre, de sorte que, d'une part, chaque borne de connexion (6a) de courant de phase en sortie est reliée à la borne de connexion (2a) de courant de phase en entrée au niveau d'un nœud commun (7a) et, d'autre part, chaque borne de connexion (6b) de courant neutre en sortie est reliée à la borne de connexion (2b) de courant neutre en entrée au niveau d'un nœud commun (7b)
**caractérisé en ce que** chacun des ensembles (6) de bornes de connexion (6a, 6b) de sortie de courant du système électromécanique d'interruption (1) d'un courant électrique est intégré dans un module respectif (A, B), un premier module (A) intégrant la borne de connexion d'entrée (2a) dédiée au courant de phase et un second module (B) intégrant la borne de connexion d'entrée (2b) dédiée au courant neutre.

2. Assemblage modulaire selon la revendication 1, **caractérisé en ce que** chaque ensemble (6) de bornes (6a, 6b) de connexion de sortie est associé à un relais thermique (3) et/ou un relais magnétique (4) et/ou un dispositif de mesure de courant différentiel (5) couplé à un interrupteur.

3. Assemblage modulaire selon une des revendications précédentes, **caractérisé en ce qu'**un relais thermique (3) et/ou un relais électromagnétique (4) et/ou un dispositif de mesure de courant différentiel (5) est associé à l'ensemble (2) de bornes (2a, 2b) de connexion d'entrée de courant en amont des nœuds (7a, 7b) de jonction aux bornes respectives de chaque ensemble (6) de bornes (6a, 6b) de connexion de sortie.

4. Assemblage modulaire selon une des revendications 1 à 3, **caractérisé en ce que** les bornes (2a, 2b) de l'ensemble (2) de connexion d'entrée présentent un pas (P1) d'écartement et des connectiques respectives adaptées pour coopérer avec au moins une barre de pontage (8) comprenant des points de connexion (9) ayant une forme de fourche.

5. Assemblage modulaire selon une des revendications 1 à 3, **caractérisé en ce que** les bornes (2a, 2b) de l'ensemble (2) de connexion d'entrée présentent un pas (P2) d'écartement et des connectiques respectives adaptées pour coopérer avec une ou plusieurs barres de pontage (8) comprenant des points de connexion (9) ayant une forme de languette.

6. Assemblage modulaire selon une des revendications précédentes, **caractérisé en ce que** le système électromécanique d'interruption (1) comprend au moins un mécanisme d'actionnement (10) d'une modification du champ magnétique à proximité du dispositif de mesure de courant différentiel (5) couplé à un interrupteur.

7. Assemblage modulaire selon une des revendications précédentes, **caractérisé en ce que** l'assemblage modulaire comprend un arrangement de connexion inter-modulaire de courant de phase entre, d'une part, le circuit de la borne de connexion d'entrée (2a) dédiée au courant de phase du premier module (A) et, d'autre part, le circuit de la borne de connexion de sortie (6a) dédiée au courant de phase du second module (B).

8. Assemblage modulaire selon la revendication 7, **caractérisé en ce que** l'arrangement de connexion inter-modulaire de courant de phase comprend un dispositif conducteur traversant (11) disposé au travers du cloisonnement inter-modulaire (12) au niveau de l'intersection du cloisonnement inter-modulaire (12) avec un plan qui sépare, d'une part, la borne de connexion d'entrée (2a) dédiée au courant de phase du premier module (A) et, d'autre part, un relais thermique (3) intégré au second module (B).

9. Assemblage modulaire selon la revendication 7, **caractérisé en ce que** le dispositif conducteur traversant (11) présente un arrangement comprenant au moins deux portions (111, 112) dont l'une est inclinée par rapport à l'autre, de sorte que :
- la première portion (111) est, d'une part, en contact avec une face de la borne de connexion d'entrée (2a) dédiée au courant de phase du premier module (A) et, d'autre part, disposée selon au moins un axe orienté depuis la borne de connexion d'entrée (2a) vers l'intérieur du premier module (A),
- la seconde portion (112) est, d'une part, arrangée transversalement par rapport au cloisonnement inter-modulaire (12) et, d'autre part, disposée dans un plan séparant, d'un côté, les bornes de connexion d'entrée (2a, 2b) et, d'un autre côté, les relais thermiques (3) couplés à des interrupteurs.

10. Assemblage modulaire selon une des précédentes, **caractérisé en ce que** l'assemblage modulaire comprend un arrangement de connexion inter-modulaire de courant neutre entre, d'une part, le circuit de la borne de connexion d'entrée (2b) dédiée au courant neutre du second module (B) et, d'autre part, un connecteur destiné à coopérer avec un circuit de la borne de connexion de sortie (6b) dédiée au courant neutre du premier module (A).

## Patentansprüche

1. Modulare Baugruppe mit einem elektromechanischen System (1) zum Unterbrechen eines elektrischen Stroms, der eine Überlastanomalie und/oder einen Kurzschluss und/oder einen Reststrom aufweist, bestehend aus:
- mindestens einer Gruppe (2) von Stromeingangs-Anschlussklemmen, die mindestens einerseits eine Anschlussklemme (2a) für den Phasenstrom und andererseits eine Anschlussklemme (2b) für den Neutralstrom aufweisen,
- mindestens einem Thermorelais (3) und/oder einem elektromagnetischen Relais (4) und/oder einer Differenzstrommessvorrichtung (5), das/die mit einem Schalter gekoppelt ist,
- mindestens zwei Gruppen (6) von Stromausgangs-Anschlussklemmen, die jeweils mindestens eine Anschlussklemme (6a) für den Phasenstrom und eine Anschlussklemme (6b) für den Neutralstrom aufweisen, so dass einerseits jede Anschlussklemme (6a) für den Phasenstrom-Ausgang mit der Anschlussklemme (2a) für den Phasenstrom-Eingang an einem gemeinsamen Knotenpunkt (7a) verbunden ist und andererseits jede Anschlussklemme (6b) für den Neutralstrom-Ausgang mit der Anschlussklemme (2b) für den Neutralstrom-Eingang an einem gemeinsamen Knotenpunkt (7b) verbunden ist,
**dadurch gekennzeichnet, dass** jede der Gruppen (6) von Stromausgangs-Anschlussklemmen (6a, 6b) des elektromechanischen System (1) zum Unterbrechen eines elektrischen Stroms in ein jeweiliges Modul (A, B) integriert ist, wobei ein erstes Modul (A) die Eingangs-Anschlussklemme (2a) für den Phasenstrom und ein zweites Modul (B) die Eingangs-Anschlussklemme (2b) für den Neutralstrom integriert.

2. Modulare Anordnung nach Anspruch 1, **dadurch gekennzeichnet, dass** jede Gruppe (6) von Ausgangs-Anschlussklemmen (6a, 6b) einem Thermorelais (3) und/oder einem Magnetrelais (4) und/oder einer Differenzstrommessvorrichtung (5) zugeordnet ist, das/die mit einem Schalter gekoppelt ist.

3. Modulare Anordnung nach einem der vorhergehenden Ansprüche, **dadurch gekennzeichnet, dass** ein Thermorelais (3) und/oder ein Elektromagnetrelais (4) und/oder eine Differenzstrommessvorrichtung (5) der Gruppe (2) von Stromeingangs-Anschlussklemmen (2a, 2b) vor den Verbindungsknoten (7a, 7b) mit den jeweiligen Anschlussklemmen jeder Gruppe (6) von Ausgangs-Anschlussklemmen (6a, 6b) zugeordnet ist.

4. Modulare Anordnung nach einem der Ansprüche 1 bis 3, **dadurch gekennzeichnet, dass** die Anschlussklemmen (2a, 2b) der Eingangs-Anschlussgruppe (2) einen Abstand (P1) und entsprechende Anschlüsse aufweisen, die so ausgelegt sind, dass sie mit mindestens einer Brückenschiene (8) zusammenwirken, die gabelförmige Anschlusspunkte (9) aufweist.

5. Modulare Anordnung nach einem der Ansprüche 1 bis 3, **dadurch gekennzeichnet, dass** die Anschlussklemmen (2a, 2b) der Eingangs-Anschlussgruppe (2) einen Abstand (P2) und entsprechende Anschlüsse aufweisen, die so ausgelegt sind, dass sie mit einer oder mehreren Brückenschienen (8) zusammenwirken, die zungenförmige Anschlusspunkte (9) aufweisen.

6. Modulare Anordnung nach einem der vorhergehenden Ansprüche, **dadurch gekennzeichnet, dass** das elektromechanischen System (1) zum Unterbrechen mindestens einen Mechanismus (10) zum Auslösen einer Änderung des Magnetfelds in der Nähe der Differenzstrommessvorrichtung (5) aufweist, der mit einem Schalter gekoppelt ist.

7. Modulare Anordnung nach einem der vorhergehenden Ansprüche, **dadurch gekennzeichnet, dass** die modulare Anordnung eine intermodulare Phasenstrom-Anschlussanordnung zwischen einerseits dem Stromkreis der Eingangs-Anschlussklemme (2a) für den Phasenstrom des ersten Moduls (A) und andererseits dem Stromkreis der Ausgangs-Anschlussklemme (6a) für den Phasenstrom des zweiten Moduls (B) aufweist.

8. Modulare Anordnung nach Anspruch 7, **dadurch gekennzeichnet, dass** die intermodulare Phasenstrom-Anschlussanordnung eine durchgehende Leitungsvorrichtung (11) aufweist, die durch die intermodulare Unterteilung (12) an der Kreuzung der intermodularen Unterteilung (12) mit einer Ebene angeordnet ist, die einerseits die Eingangs-Anschlussklemme (2a) für den Phasenstrom des ersten Moduls (A) und andererseits ein in das zweite Modul (B) integriertes Thermorelais (3) trennt.

9. Modulare Anordnung nach Anspruch 7, **dadurch gekennzeichnet, dass** die durchgehende Leitungsvorrichtung (11) eine Anordnung mit mindestens zwei Abschnitten (111, 112) aufweist, von denen einer gegenüber dem anderen geneigt ist, so dass:
- der erste Abschnitt (111) einerseits mit einer Seite der Eingangs-Anschlussklemme (2a) für den Phasenstrom des ersten Moduls (A) in Kontakt steht und andererseits entlang mindestens einer Achse angeordnet ist, die von der Eingangs-Anschlussklemme (2a) zum Inneren des ersten Moduls (A) ausgerichtet ist,
- der zweite Abschnitt (112) einerseits quer zur intermodularen Unterteilung (12) angeordnet ist und andererseits in einer Ebene liegt, die auf der einen Seite die Eingangs-Anschlussklemmen (2a, 2b) und auf der anderen Seite die mit Schaltern gekoppelten Thermorelais (3) voneinander trennt.

10. Modulare Anordnung nach einem der vorhergehenden Ansprüche, **dadurch gekennzeichnet, dass** die modulare Anordnung eine intermodulare Neutralstrom-Anschlussanordnung zwischen einerseits dem Stromkreis der Eingangs-Anschlussklemme (2b) für den Neutralstrom des zweiten Moduls (B) und andererseits einem Verbinder aufweist, der mit einem Stromkreis der Ausgangs-Anschlussklemme (6b) für den Neutralstrom des ersten Moduls (A) zusammenwirkt.

## Claims

1. Modular assembly integrating an electromechanical system (1) for interrupting an electric current exhibiting an overload fault and/or a short circuit and/or a residual current, comprising:
- at least one set (2) of current input connection terminals comprising at least, on the one hand, a connection terminal (2a) dedicated to the phase current and, on the other hand, a connection terminal (2b) dedicated to the neutral current,
- at least one thermal relay (3) and/or one electromagnetic relay (4) and/or one differential current measuring device (5) coupled to a switch,
- at least two sets (6) of current output connection terminals each comprising at least a connection terminal (6a) dedicated to the phase current and a connection terminal (6b) dedicated to the neutral current, so that, on the one hand, each phase current output connection terminal (6a) is connected to the phase current input connection terminal (2a) at a common node (7a) and, on the other hand, each neutral current output connection terminal (6b) is connected to the neutral current input connection terminal (2b) at a common node (7b),
**characterized in that** each of the sets (6) of current output connection terminals (6a, 6b) of the electromechanical system (1) for interrupting an electric current is integrated in a respective module (A, B), a first module (A) integrating the input connection terminal (2a) dedicated to the phase current and a second module (B) integrating the input connection terminal (2b) dedicated to the neutral current.

2. Modular assembly according to Claim 1, **characterized in that** each set (6) of output connection terminals (6a, 6b) is associated with a thermal relay (3) and/or a magnetic relay (4) and/or a differential current measuring device (5) coupled to a switch.

3. Modular assembly according to either of the preceding claims, **characterized in that** a thermal relay (3) and/or an electromagnetic relay (4) and/or a differential current measuring device (5) is associated with the set (2) of current input connection terminals (2a, 2b) upstream of the junction nodes (7a, 7b) to the respective terminals of each set (6) of output connection terminals (6a, 6b).

4. Modular assembly according to one of Claims 1 to 3, **characterized in that** the terminals (2a, 2b) of the set (2) of input connections have a spacing gap (P1) and respective connectors which are designed to cooperate with at least one bridging bar (8) comprising connection points (9) having a fork shape.

5. Modular assembly according to one of Claims 1 to 3, **characterized in that** the terminals (2a, 2b) of the set (2) of input connections have a spacing gap (P2) and respective connectors which are designed to cooperate with one or more bridging bars (8) comprising connection points (9) having a strip shape.

6. Modular assembly according to one of the preceding claims, **characterized in that** the electromechanical interruption system (1) comprises at least one actuating mechanism (10) for actuating a change in the magnetic field in the vicinity of the differential current measuring device (5) coupled to a switch.

7. Modular assembly according to one of the preceding claims, **characterized in that** the modular assembly comprises an inter-modular phase current connection arrangement between, on the one hand, the circuit of the input connection terminal (2a) dedicated to the phase current of the first module (A) and, on the other hand, the circuit of the output connection terminal (6a) dedicated to the phase current of the second module (B).

8. Modular assembly according to Claim 7, **characterized in that** the inter-modular phase current connection arrangement comprises a through-conducting device (11) disposed through the inter-modular partition (12) at the intersection of the inter-modular partition (12) with a plane which separates, on the one hand, the input connection terminal (2a) dedicated to the phase current of the first module (A) and, on the other hand, a thermal relay (3) integrated in the second module (B).

9. Modular assembly according to Claim 7, **characterized in that** the through-conducting device (11) has an arrangement comprising at least two portions (111, 112), one of which is inclined with respect to the other, so that:
- the first portion (111) is, on the one hand, in contact with a face of the input connection terminal (2a) dedicated to the phase current of the first module (A) and, on the other hand, disposed along at least one axis oriented from the input connection terminal (2a) towards the interior of the first module (A),
- the second portion (112) is, on the one hand, arranged transversely with respect to the inter-modular partition (12) and, on the other hand, disposed in a plane separating, on the one hand, the input connection terminals (2a, 2b) and, on the other hand, the thermal relays (3) coupled to switches.

10. Modular assembly according to one of the preceding claims, **characterized in that** the modular assembly comprises an inter-modular neutral current connection arrangement between, on the one hand, the circuit of the input connection terminal (2b) dedicated to the neutral current of the second module (B) and, on the other hand, a connector intended to cooperate with a circuit of the output connection terminal (6b) dedicated to the neutral current of the first module (A).
